# EUROPÄISCHE PATENTSCHRIFT

(11) **EP 4 230 371 B1**
(45) Veröffentlichungstag und Bekanntmachung des Hinweises auf die Patenterteilung: **28.10.2026**
(21) Anmeldenummer: 23153765.5
(22) Anmeldetag: 27.01.2023
(51) Int. Cl.: B27D 5/00, B27M 1/08

(54) **VORRICHTUNG ZUR BEARBEITUNG VON PLATTENFÖRMIGEN WERKSTÜCKEN**
DEVICE FOR MACHINING PLATE-SHAPED WORKPIECES
DISPOSITIF D'USINAGE DE PIÈCES EN FORME DE PLAQUE

(30) Priorität: 03.02.2022 DE 102022102519
(43) Veröffentlichungstag der Anmeldung: 23.08.2023
(73) Patentinhaber: IMA Schelling Deutschland GmbH, 32312 Lübbecke (DE)
(72) Erfinder: Lindenschmidt, Detlef, 32584 Löhne (DE)
(74) Vertreter: Schober, Mirko

(56) Entgegenhaltungen:
- EP-A1- 4 008 506
- EP-A1- 4 008 508
- EP-A2- 0 808 689
- WO-A1-2020/120352
- WO-A1-2020/239154
- DE-A1- 10 026 069
- DE-A1- 102009 025 816
- DE-A1- 3 317 305

## Beschreibung

Die Erfindung betrifft eine Vorrichtung zur Bearbeitung von plattenförmigen Werkstücken aus Holz oder Holzersatzstoffen gemäß dem Oberbegriff des Anspruchs 1. Eine solche Vorrichtung ist aus dem Dokument DE 33 17 305 A1 bekannt.

Bei den genannten Vorrichtungen, wie sie z.B. aus WO 2020/120352 A1 sind, sind plattenförmige Werkstücke in der Regel über eine Ausrichtstation auszurichten und werden dann einem oder einer Mehrzahl Bearbeitungsaggregate zugeführt, die verschiedene Bearbeitungsschritte an den Platten ausführen.

Gerade bei Werkstücken wie Küchenarbeitsplatten kommt es häufiger vor, dass eine L-förmige oder U-förmige Arbeitsplatte aus mehreren rechteckigen Werkstücken zusammengesetzt werden muss. Dazu müssen solche Platten miteinander verbunden werden. Vorzugsweise setzt man dazu Verbinder ein, die in Bohrungen oder Ausfräsungen in miteinander zu verbindende Platten eingesetzt werden. Die eingangs genannte Vorrichtung wird also auch dazu eingesetzt, entsprechende Bearbeitungsschritte zur Herstellung von Bohrungen oder Ausfräsungen in den Schmalseiten bzw. auf der Unterseite von Arbeitsplattenteilen anzubringen.

Aus DE 100 26 069 A1 ist ein Bearbeitungszentrum für plattenförmige Werkstücke bekannt, bei dem Werkstücke auf Spanntischen angeordnet und durch relativ zum Bearbeitungsfeld verfahrbare Bearbeitungseinheiten bearbeitet werden. Zudem ist ein Wechseltischkonzept mit Rüst- und Bearbeitungspositionen vorgesehen.

Aus WO 2020/239154 A1 ist eine Fertigungszelle mit mindestens zwei im Materialfluss in Reihe angeordneten Bearbeitungsstationen und einer Werkstücktransportvorrichtung mit Transportgleis bekannt, wobei das Transportgleis die Bearbeitungsstationen starr koppelt und eine Werkstückrückführung vorgesehen sein kann.

Die bislang dazu eingesetzten Vorrichtungen sind vergleichsweise aufwendig gestaltet, insbesondere müssen einzelne Teile unter Umständen an mehreren Stellen mit Bohrungen oder Ausfräsungen versehen werden, vor allem dann, wenn eine Küchenarbeitsplatte mehr als zwei Teile umfassen soll, kann es vorkommen, dass zwei gegenüberliegende Schmalseiten eines Werkstücks mit Bohrungen oder Verweisungen versehen werden müssen. Zum Teil werden dazu die Werkstücke im Kreislauf geführt oder aber müssen aufwendig gedreht werden.

Aufgabe der vorliegenden Erfindung ist es daher, eine genannte Vorrichtung zur Bearbeitung von plattenförmigen Werkstücken aus Holz oder Holzersatzstoffen bereitzustellen, mit welcher die oben genannten Bearbeitungsschritte vergleichsweise einfach ausgeführt werden können.

Gelöst wird diese Aufgabe durch eine Vorrichtung zur Bearbeitung von Werkstücken mit den Merkmalen des Anspruchs 1. Vorteilhafte Ausführungsformen finden sich in den Unteransprüchen.

Die erfindungsgemäße Vorrichtung zur Bearbeitung von plattenförmigen Werkstücken aus Holz oder Holzersatzstoffen löst das beschriebene Problem dadurch, dass wesentliche Komponenten zur Bearbeitung und Ausrichtung der Werkstücke in einer Reihe angeordnet sind. Dadurch können alle notwendigen Bearbeitungsschritte sequenziell erfolgen und ein aufwändiges Drehen oder Zurückführen kann entfallen.

Dazu weist die erfindungsgemäße Vorrichtung eine Ausrichtstation mit einer ersten Werkstückablage auf, an der ein in die Vorrichtung eingebrachtes Werkstück mittels einer Ausrichthilfe ausgerichtet wird. Die Ausrichthilfe dient dazu, das Werkstück so zu positionieren, dass es in nachfolgenden Bearbeitungsgängen an der richtigen Stelle bearbeitet werden kann. Bevorzugt ist vorgesehen, dass die Ausrichthilfe, insbesondere verstellbare, Anschläge umfasst. Ein einlaufendes Werkstück kann so entsprechend eines vorgesehenen Bearbeitungsschrittes maschinell oder von Hand an der verstellbaren Ausrichthilfe ausgerichtet werden. Die Ausrichthilfe kann manuell oder maschinell verstellbar ausgebildet sein. In letzterem Fall können die die Ausrichthilfe bildenden Anschläge beispielsweise durch die Maschinensteuerung abhängig vom Bearbeitungsprogramm automatisiert positioniert werden.

Ferner verfügt die erfindungsgemäße Vorrichtung über eine erste Bearbeitungsstation, mit mindestens einem ersten Bearbeitungsaggregat, das zur Bearbeitung eines mittels der Ausrichtstation ausgerichteten Werkstücks an dessen Schmalseite und/oder Unterseite ausgebildet ist. Über das erste Bearbeitungsaggregat können beispielsweise Bohrungen in die Schmalseiten der Werkstücke eingebracht oder beispielsweise Ausfräsungen in die Unterseite des Werkstücks eingebracht werden.

Soweit in der vorliegenden Anmeldung von oben und unten die Rede ist, beziehen sich diese Angaben auf die Vertikalrichtung, also diejenige Richtung, die senkrecht zu dem Boden verläuft, auf welchem die erfindungsgemäße Vorrichtung aufgestellt ist.

Des Weiteren umfasst die erfindungsgemäße Vorrichtung eine zweite Bearbeitungsstation mit einer zweiten Werkstückablage und mindestens einem zweiten Bearbeitungsaggregat, welches zur Bearbeitung des Werkstücks ausgebildet ist. Die zweite Bearbeitungsstation ist von der ersten Bearbeitungsstation verschieden, d. h. deren Bearbeitungsaggregate sind grundsätzlich unabhängig voneinander ansteuerbar.

Eine Transportvorrichtung, welche wenigstens eine in einer Transportrichtung verschiebliche Werkstückerfassungseinrichtung aufweist, ist in der erfindungsgemäßen Vorrichtung vorgesehen und dazu ausgelegt, ein an der Ausrichtstation ausgerichtetes Werkstück zu erfassen und zumindest bis zur zweiten Bearbeitungsstation zu transportieren. Die Werkstückerfassungsvorrichtung kann alternativ oder ergänzend auch mit der Verfahrbewegung des ersten Bearbeitungsaggregates synchronisierbar ausgebildet sein bzw. synchronisiert werden. Die Bewegung der Transportvorrichtung wird erfindungsgemäß in oder entgegen der Transportrichtung so gesteuert, dass diese mit der Bewegung des Bearbeitungsaggregats quer oder senkrecht zur Transportrichtung überlagert wird. Es ist so möglich, komplexere zwei- oder dreidimensionale Bohr- oder Fräsbilder im Werkstück zu erzeugen. Nach dem Ausrichten in der Ausrichtstation kann die Transportvorrichtung das ausgerichtete Werkstück übernehmen und grundsätzlich auch während des gesamten Bearbeitungsprozesses in Transportrichtung transportieren und in einer definierten Lage festhalten. Bevorzugt ist vorgesehen, dass die Werkstückerfassungseinrichtung in Transportrichtung verschiebliche Greifer oder Saugspanner umfasst.

Bevorzugt ist vorgesehen, dass die Transportvorrichtung eine Führung aufweist, an der die Werkstückerfassungseinrichtung in Transportrichtung verschieblich geführt ist. Eine solche Führung hat eine ganze Reihe von Vorteilen, da sie grundsätzlich ermöglicht, dass Werkstücke in einer einzigen Aufspannung durch die gesamte Anlage transportiert werden können. Die Werkstückerfassungseinrichtung muss also nach Aufnahme des Werkstücks nicht umgreifen oder das Werkstück vor Beendigung der Bearbeitung freigegeben. Dazu ist vorteilhafterweise vorgesehen, dass die Führung sich durchgängig in Transportrichtung von der Ausrichtstation über die erste und die zweite Bearbeitungsstation erstreckt. Sofern eine Ablage- und/ oder Ausschleusevorrichtung vorhanden ist, erstreckt sich die Führung bevorzugt optional bis hierher.

Je nach Anwendungsfall kann es von Vorteil sein, die Werkstückerfassungseinrichtung hinsichtlich ihrer vertikalen Ausrichtung so zu positionieren, dass ein ordnungsgemäßer Werkstücktransport und eine ordnungsgemäße Werkstückbearbeitung möglich bleiben, möglichst ohne den Angriffspunkt der Werkstückerfassungseinrichtung am Werkstück ändern zu müssen. Die Werkstückerfassungseinrichtung kann sich daher gemäß einer bevorzugten Ausführungsform vom Boden ausgehend oberhalb des ersten Bearbeitungsaggregates erstrecken. Nach einer weiteren bevorzugten Ausführungsform kann sich dann die Werkstückerfassungseinrichtung vom Boden ausgehend unterhalb eines Aggregateträgers des zweiten Bearbeitungsaggregats erstrecken.

Bevorzugt kann vorgesehen sein, dass die Werkstückerfassungseinrichtung so ausgebildet oder orientiert ist, dass sie die plattenförmigen Werkstücke in horizontaler Ausrichtung, d. h. mit ihren Flächenseiten, bevorzugt im Wesentlichen parallel zum Boden in Transportrichtung transportiert. Auf diese Weise ist es möglich, ein plattenförmiges Werkstück im Durchlauf sowohl von seiner Oberseite als auch von seiner Unterseite mit lediglich einem oder demselben Bearbeitungsaggregat zu bearbeiten.

In dieser Transportrichtung sind auch die oben genannten Komponenten der erfindungsgemäßen Vorrichtung hintereinander angeordnet. Dabei gibt es zwei Alternativen:
i) entweder können in Transportrichtung die Ausrichtstation, dahinter die erste Bearbeitungsstation und dahinter die zweite Bearbeitungsstation angeordnet sein, oder
ii) es können die Ausrichtstation, dahinter die zweite Bearbeitungsstation und dahinter die erste Bearbeitungsstation angeordnet sein.

Auch wenn die genannten Komponenten in Transportrichtung hintereinander angeordnet sind, so ist es möglich, dass zwischen der ersten Bearbeitungsstation und der zweiten Bearbeitungsstation eine Zwischenstation angeordnet ist. Diese umfasst eine zweite Werkstückablage und ist dabei so angeordnet, dass ein auf der zweiten Werkstückablage abgelegtes Werkstück mit dem ersten Bearbeitungsaggregat an einer weiteren Schmalseite und/oder Unterseite bearbeitet werden kann. Auf diese Weise ist es möglich, gegenüberliegende Schmalseiten oder allgemein gegenüberliegende Seiten eines Werkstücks nacheinander zu bearbeiten, ohne dass dabei eine Rückführung des Werkstücks oder ein Drehen des Werkstücks erforderlich ist. Für das Drehen oder Zurückführen erforderliche Vorrichtungskomponenten sind daher entbehrlich, was die erfindungsgemäße Vorrichtung gegenüber anderen Vorrichtungen stark vereinfacht und kostengünstiger macht. Bevorzugt umfasst die zweite Werkstückablage eine Einrichtung, mit der das Werkstück auf der Werkstückablage fixiert werden kann. Nach einer vorteilhaften Ausführungsform kann dazu vorgesehen sein, dass die zweite Werkstückablage Saugtraversen zur Ablage und zum Aufspannen des Werkstücks umfasst. Eine solche Saugtraverse ist in der Lage, ein Werkstück von der Unterseite zu fassen und festzuhalten, wobei die Bearbeitung durch das zweite Bearbeitungsaggregat nicht weiter behindert wird.

Erfindungsgemäß ist ferner vorgesehen, dass das erste Bearbeitungsaggregat einen Werkzeughalter aufweist, der um eine Achse quer zur Transportrichtung und parallel zum Boden schwenkbar und so einstellbar ist, dass die Drehachse eines darin gehaltenen, drehbar angetriebenen Werkzeugs senkrecht zu einer Schmalseite oder Flächenseite des Werkstücks steht. Auf diese Weise ist es nicht nur möglich, das entsprechende Werkzeug zu schwenken, sondern auch, insbesondere unter Einsatz der oben erwähnten zweiten Werkstückablage, ein Werkstück auf der ersten Werkstückablage mittels des ersten Bearbeitungsaggregates beispielsweise an der ersten Schmalseite zu bearbeiten, zur zweiten Werkstückablage zu transportieren und dort abzulegen und mittels desselben ersten Bearbeitungsaggregates dann unter Verschwenken des Werkzeughalters an der gegenüberliegenden zweiten Schmalseite des Werkstücks zu bearbeiten. Außerdem können nicht nur Schmalseiten auf diese Weise bearbeitet werden, sondern gegebenenfalls kann der Werkzeughalter auch so verschwenkt werden, dass eine Bearbeitung eines entsprechenden Werkstücks von oben oder von unten möglich ist.

Nach einer bevorzugten Ausführungsform der vorliegenden Erfindung kann vorgesehen sein, dass auf der der ersten Bearbeitungsstation abgewandten Seite der zweiten Bearbeitungsstation eine Ablage- und/oder Ausschleusevorrichtung angeordnet ist. Diese Ablage- und/oder Ausschleusevorrichtung kann dazu genutzt werden, Fertigteile zwischenzuspeichern bzw. aus der erfindungsgemäßen Vorrichtung abzutransportieren.

Während die Bearbeitungsaggregate unterschiedliche Bearbeitungsschritte ausführen können, ist bevorzugt vorgesehen, dass das erste Bearbeitungsaggregat und/oder das zweite Bearbeitungsaggregat ein drehbar angetriebenes Werkzeug umfassen. Dabei kann es sich insbesondere um einen Fräser handeln, jedoch sind auch Bohrer oder andere drehbar angetriebene Werkzeuge denkbar. Insbesondere wenn es sich um das Einbringen von Aussparungen zur Verbindung von angrenzenden Teilen einer Küchenarbeitsplatte handelt, können diese Aussparungen mit den genannten Werkzeugen in das jeweilige Werkstück eingebracht werden.

Vorstellbar ist grundsätzlich, dass an den einzelnen Bearbeitungsstationen nämlich lediglich ein einziges Werkzeug vorhanden ist. Auch die Möglichkeit des Werkzeugwechsels ist grundsätzlich gegeben. Nach einer bevorzugten Ausführungsform der vorliegenden Erfindung kann daher vorgesehen sein, dass die erste Bearbeitungsstation und/oder die zweite Bearbeitungsstation ein Werkzeugmagazin mit einer Mehrzahl darin aufgenommener und daraus zur Bearbeitung an das erste Bearbeitungsaggregat bzw. das zweite Bearbeitungsaggregat übergebbarer Werkzeuge aufweist. Je nach Bearbeitungsgang, der von der Maschinensteuerung für die erfindungsgemäße Vorrichtung vorgesehen ist, kann zum Einbringen einer entsprechenden Aussparung in das betreffende Werkstück aus einem solchen Magazin ein geeignetes Werkzeug ausgewählt werden. Beispielsweise kann das entsprechende Bearbeitungsaggregat dazu zum Magazin gefahren werden und dort ein nicht gebrauchtes Werkzeug abgeben bzw. ein benötigtes Werkzeug übernehmen.

Die Erfindung wird nachfolgend anhand der Figuren 1 bis 10 näher erläutert.

Die Figuren 1 bis 9 zeigen eine schematische Ansicht einer erfindungsgemäßen Vorrichtung in unterschiedlichen Betriebszuständen.

Figur 10 zeigt eine Draufsicht auf eine aus zwei miteinander verbundenen Werkstücken gebildete Küchenarbeitsplatte.

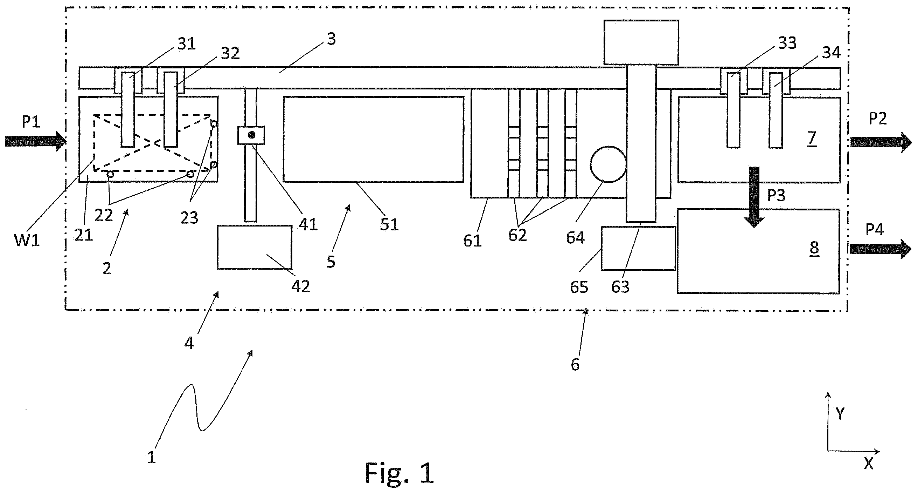

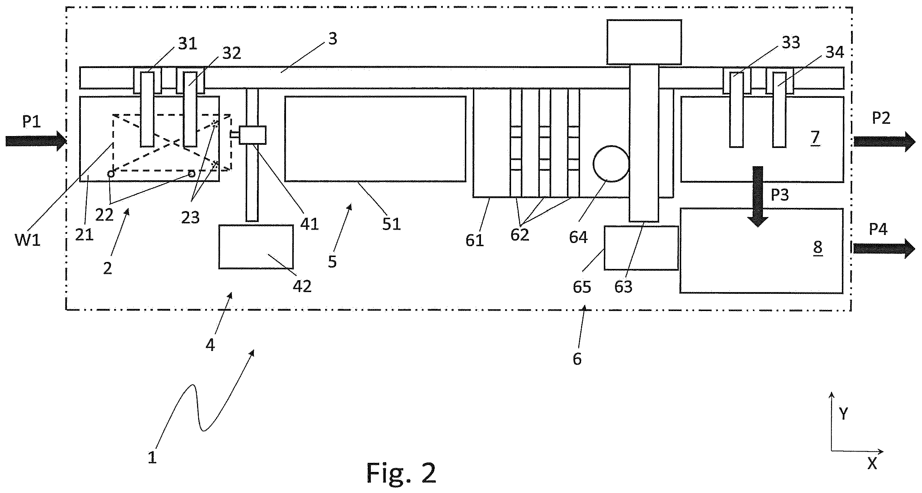

Die Vorrichtung 1 weist eine Mehrzahl Teilkomponenten auf. Ein erstes Werkstück W1 wird in Richtung P1 aufgegeben und gelangt zunächst zur Ausrichtstation 2. Dort wird es durch Ausrichthilfen 21, 22, 23 ausgerichtet, Fig. 1. Solche Ausrichthilfen können im einfachsten Fall Anschläge sein, gegen welche das Werkstück W1 geschoben wird. Die Ausrichtung dient dazu, das Werkstück W1 für die nachfolgende Bearbeitung in die von der Maschinensteuerung (nicht gezeigt) vorgesehene Bearbeitungsposition zu überführen. Dies ist in Fig. 2 weiter veranschaulicht. Bevorzugt ist vorgesehen, dass die plattenförmigen Werkstücke W1, W2 mit ihren Flächenseiten parallel zum (hier nicht gezeigten) Boden, der parallel oder zumindest im Wesentlichen parallel zur hier dargestellten Zeichenebene verläuft und auf welchem die erfindungsgemäße Vorrichtung steht, durch die Vorrichtung 1 gefördert werden.

In Fig. 2 ist dargestellt, wie das Werkstück W1 durch eine Transportvorrichtung 3, 31, 32 erfasst und mittels der ersten Bearbeitungsstation 4 in einer Bearbeitungsposition bearbeitet wird. Die Transportvorrichtung 3, 31, 32 weist eine entlang einer Führung 3 in einer Vorschubrichtung X verschiebliche Werkstückerfassungseinrichtung 31, 32 auf. Eine Werkstückerfassungseinrichtung kann beispielsweise ein Greifer oder ein Saugspanner sein, jedenfalls aber eine Einrichtung, die in der Lage ist, das Werkstück zu erfassen und in Richtung X zu transportieren. Die Führung 3 ist dabei bevorzugt so ausgebildet, dass sie sich von der Ausrichtstation über die erste und zweite Bearbeitungsstation 4, 6 erstreckt, sodass ein von der Werkstückerfassungseinrichtung 31, 32 erfasstes Werkstück in einer einzigen Aufspannung durch die komplette erfindungsgemäße Vorrichtung transportiert werden kann. Im gezeigten Beispiel der Fig. 2 ist das Werkstück W1 so positioniert, dass eine erstes Bearbeitungsaggregat 41 die in Verschieberichtung X vorauseilende Schmalseite des Werkstücks W1 bearbeiten kann. Das Bearbeitungsaggregat 41 kann beispielsweise ein Wechselaggregat sein, welches sich zum Beispiel in Richtung Y senkrecht zur Vorschubrichtung X zu einem Werkzeugmagazin 42 hin verfahren lässt, um dort bevorratete Werkzeuge, z. B. Bohrer oder Fräser, aufzunehmen oder abzugeben.

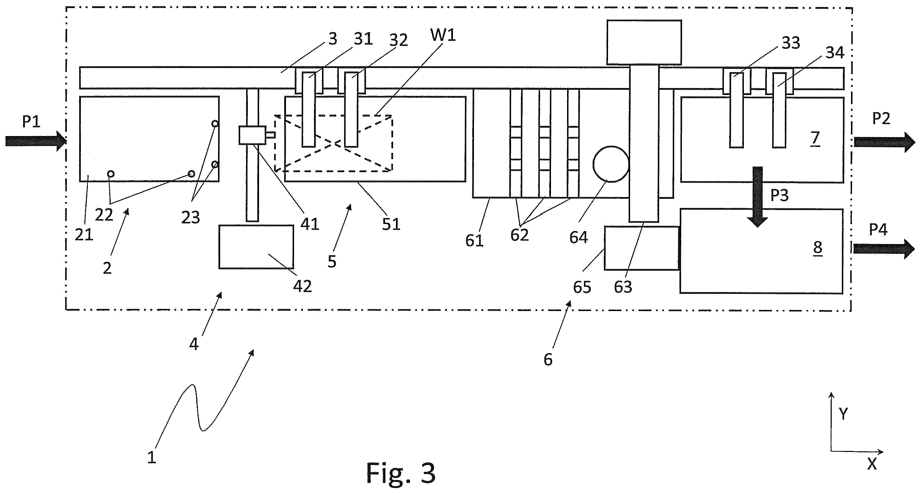

Nach erfolgter Bearbeitung der Schmalseite des Werkstücks W1 wird dieses über die Transportvorrichtung 3, 31, 32 zu einer Zwischenstation 5 mit einer zweiten Werkstückablage 51 weitertransportiert. Im in Fig. 3 gezeigten Beispiel befindet sich dann das Werkstück W1 an einer Bearbeitungsposition, an welcher das erste Bearbeitungsaggregat 41, welches nun um 180° in Transportrichtung X gedreht ist, nun auch die in Transportrichtung X nachlaufende Schmalseite des Werkstücks W1 bearbeiten kann. Natürlich kann dieser Bearbeitungsschritt auch durch ein zusätzliches Bearbeitungsaggregat (nicht gezeigt) der ersten Bearbeitungsstation 4 bearbeitet werden.

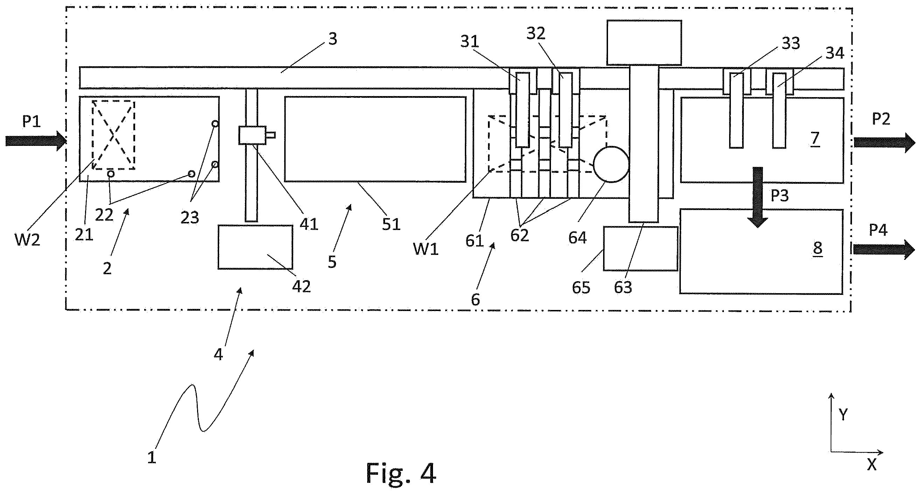

Wie in Fig. 4 dargestellt, kann nun das Werkstück W1 durch die Transportvorrichtung 3, 31, 32 in Transportrichtung X weiter verschoben und an einer zweiten Bearbeitungsstation 6 mit einer weiteren Werkstückablage 61 abgelegt werden, welche bevorzugt Saugtraversen 62 zur Ablage und zum Aufspannen von Werkstücken aufweist. Die zweite Bearbeitungsstation 6 weist bevorzugt einen Aggregateträger 63 auf, der eine oder mehrere Bearbeitungsaggregate 64 aufnehmen kann. Auch hier kann ähnlich wie bei der ersten Bearbeitungsstation 4 mit Wechselaggregaten gearbeitet werden, optional steht ein zweites Werkzeugmagazin 65 zur Verfügung, welches Wechselwerkzeuge oder Wechselaggregate für das Bearbeitungsaggregat 64 vorhält. Zwischenzeitlich kann eingangs der erfindungsgemäßen Vorrichtung 1 ein weiteres Werkstück W2 aufgegeben werden. Prinzipiell kann das Werkstück W2 aufgegeben werden, wenn das erste Werkstück W1 den Bearbeitungsbereich der ersten Bearbeitungsvorrichtung 4 verlässt oder verlassen hat. Generell ist es möglich, die Reihenfolge der ersten Bearbeitungsstation 4 und der zweiten Bearbeitungsstation 6 zu vertauschen. Wichtig für die erfindungsgemäße Vorrichtung 1 ist jedoch, dass die Ausrichtstation 2, die erste Bearbeitungsstation 4, die Zwischenstation 5 und die zweite Bearbeitungsstation 6 in Transportrichtung X hintereinander angeordnet sind. Dies ermöglicht einen linearen Weitertransport mittels der Transportvorrichtung 3, 31, 32 und damit eine besonders effektive Bearbeitung einlaufender Werkstücke W1, W2.

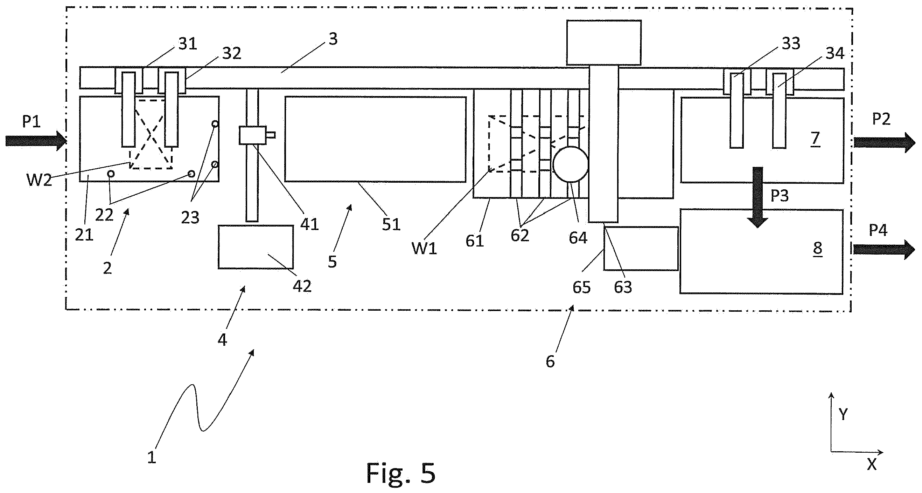

Während das Werkstück W1 auf der zweiten Werkstückablage 61 von den Saugtraversen 62 oder auf andere Weise fixiert ist, ist die Werkstückerfassungseinrichtung in 31, 32 frei und kann zurück zur Ausrichtstation 2 bewegt werden, um dort das Werkstück W2 aufzunehmen, Fig. 5. Währenddessen kann das aufgespannte erste Werkstück W1 an der zweiten Bearbeitungsstation 6 bearbeitet werden.

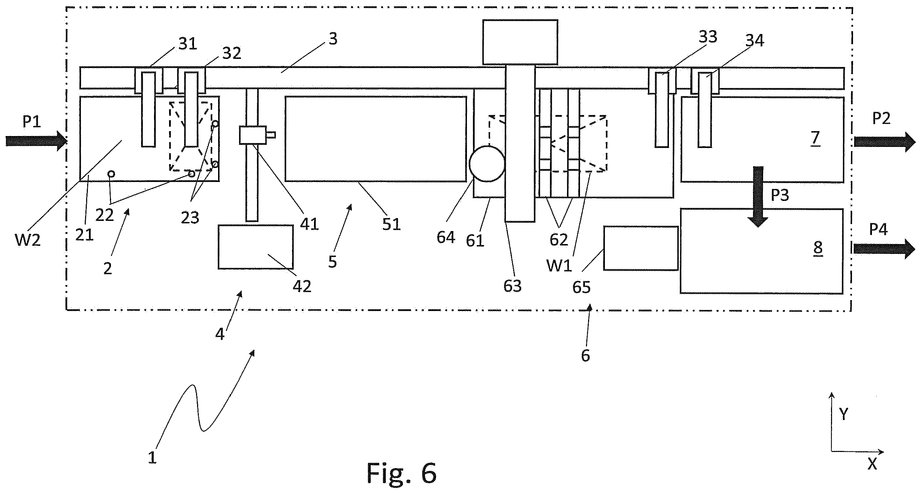

Während noch das Werkstück W1 an der zweiten Bearbeitungsstation 6 bearbeitet wird, wird das zweite Werkstück W2 wiederum durch die Ausrichthilfen 21, 22, 23 ausgerichtet. Eine weitere entlang der Transportrichtung X verschiebliche Werkstückerfassungseinrichtung 33, 34, die genauso ausgebildet sein kann wie die erste Werkstückerfassungseinrichtung 31, 32, kann ein fertig bearbeitetes Werkstück W1 an der zweiten Bearbeitungsstation 6 aufnehmen, Fig. 6.

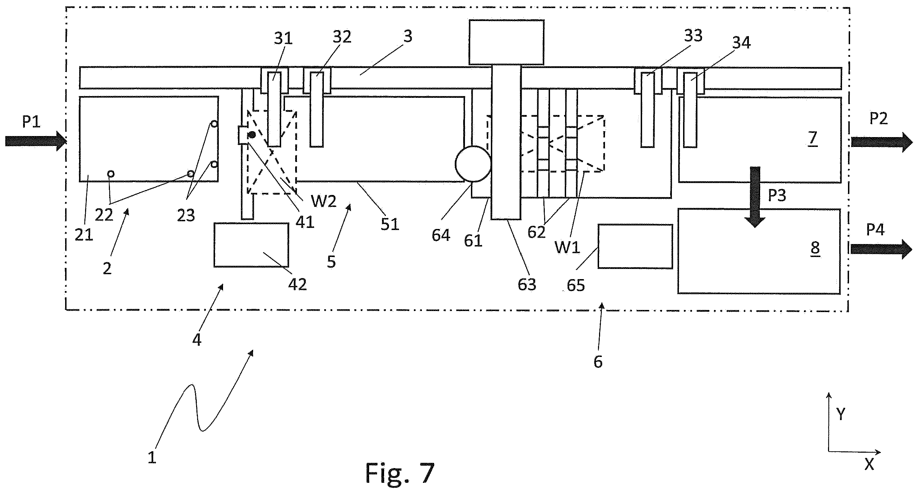

Wie aus Fig. 7 zu entnehmen, kann an der ersten Bearbeitungsstation das dortige Bearbeitungsaggregat 41 optional auch so eingestellt werden, dass es die Unterseite des Werkstücks W2 bearbeiten kann. Dies geschieht hier im Bereich der Zwischenstation 5, bei welcher das Werkstück W2 auf der Werkstückablage 51 liegt und zumindest von der Werkstückerfassungseinrichtung 31 festgehalten wird.

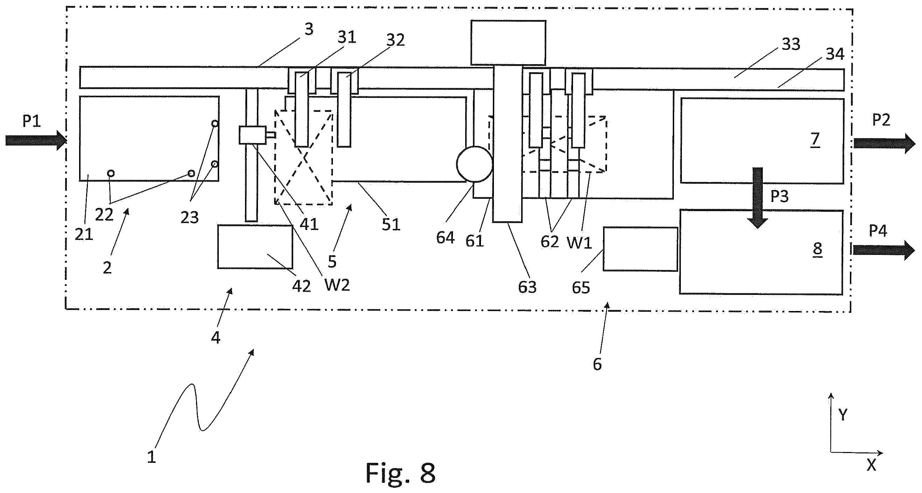

Wie in Fig. 8 dargestellt, ist jetzt die Bearbeitung des ersten Werkstücks W1 abgeschlossen, und die zweite verschiebliche Werkstückerfassungseinrichtung 33, 34 kann das Werkstück W1 aufnehmen. Die Werkstückerfassungseinrichtung 31, 32 der Transportvorrichtung 3 bewegt das zweite Werkstück W2 nun in Transportrichtung X etwas weiter, sodass das erste Bearbeitungsaggregat 41 auch die in diesem Fall in Transportrichtung X nachlaufende Schmalseite des Werkstücks W2 bearbeiten kann.

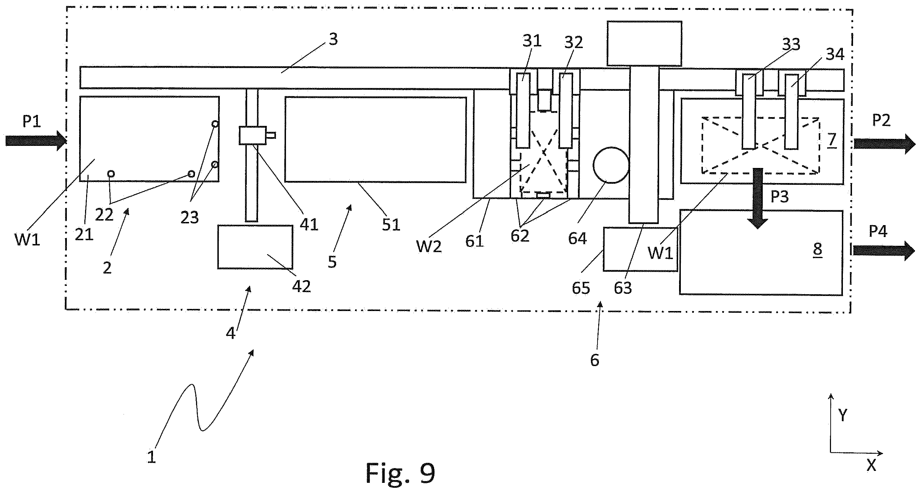

Wie man aus Fig. 9 entnimmt, wird das erste Werkstück W1 durch die zweite Werkstückerfassungseinrichtung 33, 34 zu einer Ablagevorrichtung 7 bewegt. Möglich ist nun die direkte Ausschleusung des Werkstücks W1 in Transportrichtung X (siehe Pfeil P2). Alternativ oder ergänzend können fertige Werkstücke W1 beispielsweise an eine weitere Ablagevorrichtung 8 übergeben werden (Pfeils P3), auf der dann beispielsweise ein Werkstückstapel gebildet werden kann, welcher dann stapelweise ausgeschleust wird (Pfeil P4). Unterdessen wird das zweite bzw. nachlaufende Werkstück W2 durch die verschiebliche Werkstückerfassungseinrichtung 31, 32 der Transportvorrichtung 3 zur zweiten Bearbeitungsstation 6 bewegt und dort bearbeitet werden.

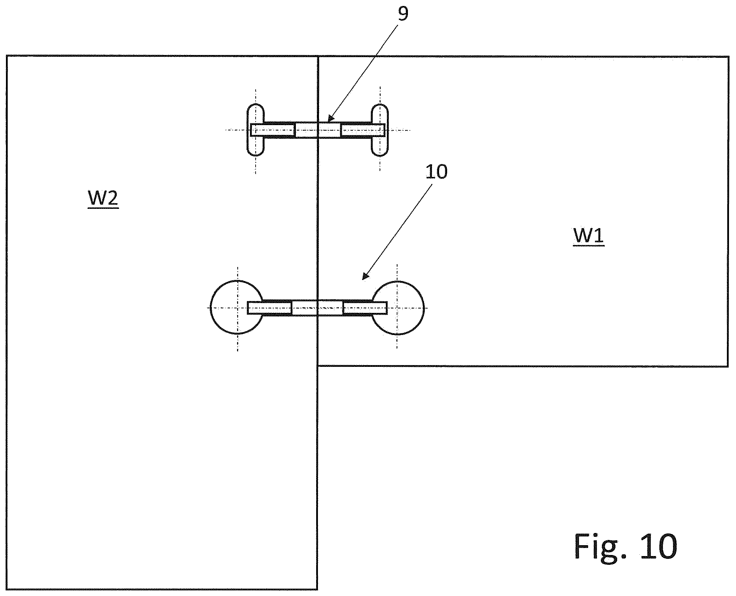

Durch die mit der erfindungsgemäßen Vorrichtung in linearer Abfolge ermöglichten Bearbeitungsschritte lassen sich beispielsweise mehrteilige Küchenarbeitsplatten so vorbereiten, dass diese mit geeigneten Verbindungsmitteln miteinander verbunden werden können. Fig. 10 verdeutlicht dies anhand der oben beschriebenen Werkstücke W1 und W2. Im Rahmen der oben beschriebenen Bearbeitung sind die Verbindungsbohrungen bzw. Verbindungsaussparungen 9, 10 entstanden. Im gezeigten Beispiel sind die beiden Werkstücke W1 und W2 so aneinandergefügt, dass die Verbindungsaussparungen 9, 10 miteinander fluchten. Auf diese Weise können geeignete Verbindungselemente eingesetzt und die beiden Platten W1 und W2 miteinander kraftschlüssig verbunden werden.

## Patentansprüche

1. Vorrichtung (1) zur Bearbeitung von plattenförmigen Werkstücken (W1, W2) aus Holz oder Holzersatzstoffen, aufweisend:
- eine Ausrichtstation (2) mit einer ersten Werkstückablage (21), an der ein in die Vorrichtung (1) eingebrachtes (P1) Werkstück (W1, W2) mittels einer Ausrichthilfe (21, 22, 23) ausgerichtet wird,
- eine erste Bearbeitungsstation (4), mit mindestens einem ersten Bearbeitungsaggregat (41), das zur Bearbeitung eines mittels der Ausrichtstation (2) ausgerichteten Werkstücks (W1, W2) an dessen Schmalseite und/oder Unterseite ausgebildet ist,
- eine zweite Bearbeitungsstation (6) mit einer zweiten Werkstückablage (61) und mindestens einem zweiten Bearbeitungsaggregat (64), welches zur Bearbeitung des Werkstücks (W1, W2) ausgebildet ist,
- eine Transportvorrichtung (3; 31, 32), welche wenigstens eine in einer Transportrichtung (X) verschiebliche Werkstückerfassungseinrichtung (31, 32) aufweist, die dazu ausgelegt ist, ein an der Ausrichtstation (2) a usgerichtetes Werkstück (W1, W2) zu erfassen und zumindest bis zur zweiten Bearbeitungsstation (6) zu transportieren,
wobei in Transportrichtung (X) hintereinander
i) die Ausrichtstation (2), dahinter die erste Bearbeitungsstation (4) und dahinter die zweite Bearbeitungsstation (6) oder
ii) die Ausrichtstation (2), dahinter die zweite Bearbeitungsstation (6) und dahinter die erste Bearbeitungsstation (4) angeordnet sind,
**dadurch gekennzeichnet,**
**dass** das erste Bearbeitungsaggregat (41) einen Werkzeughalter aufweist, der um eine Achse (Y) quer zur Transportrichtung (X) und parallel zum Boden schwenkbar und so einstellbar ist, dass die Drehachse eines darin gehaltenen, drehbar angetriebenen Werkzeugs senkrecht zu einer Schmalseite oder Flächenseite des Werkstücks (W1, W2) steht, und
**dass** die Bewegung der Transportvorrichtung (3; 31, 32) in oder entgegen der Transportrichtung (X) mit der Bewegung des ersten Bearbeitungsaggregats (41) quer oder senkrecht zur Transportrichtung (X) überlagerbar ist.

2. Vorrichtung (1) nach Anspruch 1,
**dadurch gekennzeichnet,**
**dass** sie zwischen der ersten Bearbeitungsstation (4) und der zweiten Bearbeitungsstation (6) eine Zwischenstation aufweist, die eine zweite Werkstückablage (51) umfasst und so angeordnet ist, dass ein auf der zweiten Werkstückablage (51) abgelegtes Werkstück (W1, W2) mit dem ersten Bearbeitungsaggregat (41) an einer weiteren Schmalseite und/oder Unterseite bearbeitet werden kann.

3. Vorrichtung (1) nach Anspruch 1 oder 2,
**dadurch gekennzeichnet,**
**dass** auf der der ersten Bearbeitungsstation (4) abgewandten Seite der zweiten Bearbeitungsstation (6) eine Ablage- und/ oder Ausschleusevorrichtung (7, 8) angeordnet ist.

4. Vorrichtung (1) nach einem der vorigen Ansprüche,
**dadurch gekennzeichnet,**
**dass** das erste Bearbeitungsaggregat (41) und/oder das zweite Bearbeitungsaggregat (64) ein drehbar angetriebenes Werkzeug, insbesondere einen Fräser, umfasst.

5. Vorrichtung (1) nach einem der vorigen Ansprüche,
**dadurch gekennzeichnet,**
**dass** die erste Bearbeitungsstation (4) und/oder die zweite Bearbeitungsstation (6) ein Werkzeugmagazin (42, 65) mit einer Mehrzahl darin aufgenommener und daraus zur Bearbeitung an das erste Bearbeitungsaggregat (41) bzw. das zweite Bearbeitungsaggregat (64) übergebbarer Werkzeuge aufweist.

6. Vorrichtung (1) nach einem der vorigen Ansprüche,
**dadurch gekennzeichnet,**
**dass** die Ausrichthilfe, insbesondere verstellbare, Anschläge (22, 23) umfasst.

7. Vorrichtung (1) nach einem der vorigen Ansprüche,
**dadurch gekennzeichnet,**
**dass** die Transportvorrichtung (3, 31, 32) eine Führung (3) aufweist, an der die Werkstückerfassungseinrichtung (31, 32) in Transportrichtung (X) verschieblich geführt ist.

8. Vorrichtung (1) nach Anspruch 8,
**dadurch gekennzeichnet,**
**dass** die Führung (3) sich durchgängig in Transportrichtung (X) von der Ausrichtstation (2) über die erste und die zweite Bearbeitungsstation (4, 6) und optional bis zu Ablage- und/ oder Ausschleusevorrichtung (7, 8) erstreckt.

9. Vorrichtung (1) nach einem der vorigen Ansprüche,
**dadurch gekennzeichnet,**
**dass** die Werkstückerfassungseinrichtung (31, 32) in Transportrichtung verschiebliche Greifer oder Saugspanner umfasst.

10. Vorrichtung (1) nach einem der vorigen Ansprüche,
**dadurch gekennzeichnet,**
**dass** die Werkstückerfassungseinrichtung (31, 32) sich vom Boden ausgehend oberhalb des ersten Bearbeitungsaggregates (41) erstreckt.

11. Vorrichtung (1) nach einem der vorigen Ansprüche,
**dadurch gekennzeichnet,**
**dass** die Werkstückerfassungseinrichtung (31, 32) sich vom Boden ausgehend unterhalb eines Aggregateträgers (63) des zweiten Bearbeitungsaggregats (64) erstreckt.

12. Vorrichtung (1) nach einem der vorigen Ansprüche,
**dadurch gekennzeichnet,**
**dass** die Werkstückerfassungseinrichtung (31, 32) so ausgebildet ist, dass sie die plattenförmigen Werkstücke (W1, W2) in horizontaler Ausrichtung, d. h. mit ihren Flächenseiten, bevorzugt im Wesentlichen, parallel zum Boden in Transportrichtung (X) transportiert.

13. Vorrichtung (1) nach einem der vorigen Ansprüche,
**dadurch gekennzeichnet,**
**dass** die zweite Werkstückablage (61) Saugtraversen (62) zur Ablage und zum Aufspannen des Werkstücks (W1, W2) umfasst.

## Claims

1. Device (1) for machining plate-shaped workpieces (W1, W2) of wood or wood substitutes, comprising:
- an alignment station (2) with a first workpiece support (21) on which a workpiece (W1, W2) introduced into the device (1) is aligned by means of an alignment aid (21, 22, 23)
- a first machining station (4) with at least a first machining assembly (41) which is configured for machining the narrow side and/or underside of a workpiece (W1, W2) that has been aligned by means of the alignment station (2)
- a second machining station (6) with a second workpiece support (61) and at least a second machining assembly (64) which is configured for machining the workpiece (W1, W2)
- a transport device (3; 31, 32) which has at least one workpiece pick-up device (31, 32) which is displaceable in a transport direction (X) and is designed to pick up a workpiece (W1, W2) that has been aligned at the alignment station (2) and to transport it at least up to the second machining station (6),
wherein arranged in succession in the transport direction (X) are
i) the alignment station (2), then the first machining station (4) and then the second machining station (6), or
ii) the alignment station (2), then the second machining station (6) and then the first machining station (4)
**characterised in that**
the first machining assembly (41) has a tool holder which is capable of pivoting about an axis (Y) transversely to the transport direction (X) and parallel to the base and which can be set so that the axis of rotation of a rotatably driven tool held therein is at right angles to a narrow side or flat surface side of the workpiece (W1, W2), and
that the movement of the transport device (3; 31, 32) in or opposite the transport direction (X) can be overlapped with the movement of the first machining assembly (41) transversely or perpendicularly to the transport direction (X).

2. Device (1) according to Claim 1
**characterised in that**
it has between the first machining station (4) and the second machining station (6) an intermediate station which comprises a second workpiece support (51) and is arranged so that a workpiece (W1, W2) placed on the second workpiece support (51) can be machined with the first machining assembly (41) along a further narrow side and/or underneath side.

3. Device (1) according to Claim 1 or 2
**characterised in that**
a support and/or ejection device (7, 8) is arranged on the side of the second machining station (6) facing away from the first machining station (4).

4. Device (1) according to one of the preceding claims
**characterised in that**
the first machining assembly (41) and/or the second machining assembly (64) comprises a rotatably driven tool, in particular a cutter.

5. Device (1) according to one of the preceding claims,
**characterised in that**
the first machining station (4) and/or the second machining station (6) has a tool magazine (42, 65) with a plurality of tools which are contained therein and which for machining purposes can be transferred therefrom to the first machining assembly (41) or second machining assembly (64).

6. Device (1) according to one of the preceding claims
characterised that
the alignment aid comprises stops (22, 23) in particular displaceable stops.

7. Device (1) according to one of the preceding claims,
**characterised in that**
the transport device (3, 31, 32) has a guide (3) along which the workpiece pick-up device (31, 32) is guided in displaceable manner in the transport direction (X).

8. Device (1) according to Claim 8
**characterised in that**
the guide (3) extends continuously in the transport direction (X) from the alignment station (2) over the first and second machining stations (4, 6) and optionally up to the support and/or ejection device (7, 8).

9. Device (1) according to one of the preceding claims,
characterised that
the workpiece pick-up device (31, 32) comprises a gripper or suction clamp that is displaceable in the transport direction.

10. Device (1) according to one of the preceding claims
**characterised in that**
starting from the base the workpiece pick-up device (31, 32) extends up above the first machining assembly (41).

11. Device (1) according to one of the preceding claims
**characterised in that**
starting from the base the workpiece pick-up device (31, 32) extends underneath an assembly carrier (63) of the second machining assembly (64).

12. Device (1) according to one of the preceding claims
**characterised in that**
the workpiece pick-up device (31, 32) is configured so that it transports the plate-shaped workpieces (W1, W2) in horizontal alignment, i.e. with their flat surface sides, preferably substantially, parallel to the base in the transport direction (X).

13. Device (1) according to one of the preceding claims
**characterised in that**
the second workpiece support (61) comprises suction crossbeams (62) for supporting and clamping the workpiece (W1, W2).

## Revendications

1. Dispositif (1) d'usinage de pièces en forme de plaque (W1, W2) en bois ou en matériaux de substitution du bois, comportant:
- un poste d'alignement (2) doté d'un premier dispositif de dépôt de pièce (21), sur lequel une pièce (W1, W2) introduite dans le dispositif (1) est alignée au moyen d'un dispositif d'alignement (21, 22, 23),
- un premier poste d'usinage (4) comprenant au moins une première unité d'usinage (41) qui, pour usinage d'une pièce (W1, W2) alignée au moyen du poste d'alignement (2), est formée à son petit côté et/ou à sa face inférieure,
- un second poste d'usinage (6) comprenant un second dispositif de dépôt de pièce (61) et au moins une seconde unité d'usinage (64) qui est formée pour l'usinage de la pièce (W1, W2),
- un dispositif de transport (3; 31, 32) comprenant au moins un dispositif de prise de pièce (31, 32) mobile dans une direction de transport (X), qui conçu pour saisir une pièce (W1, W2) alignée au poste d'alignement (2), et pour la transporter au moins jusqu'au second poste d'usinage (6),
dans lequel, dans la direction de transport (X), sont disposés successivement
i) le poste d'alignement (2), derrière celui-ci le premier poste d'usinage (4), et derrière celui-ci le second poste d'usinage (6) ou
ii) le poste d'alignement (2), derrière celui-ci le second poste d'usinage (6), et ensuite derrière celui-ci le premier poste d'usinage (4),
**caractérisé en ce**
**que** la première unité d'usinage (41) comporte un porte-outil pivotant autour d'un axe (Y) transversal à la direction de transport (X) et parallèle au sol, et réglable de manière à ce que l'axe de rotation d'un outil, maintenu dans ce porte-outil et entraîné en rotation, soit perpendiculaire à un petit côté ou à une face de la pièce (W1, W2), et **en ce que** le mouvement du dispositif de transport (3; 31, 32) dans ou à l'opposé de la direction de transport (X) peut être superposé au mouvement de la première unité d'usinage (41) transversalement ou perpendiculairement à la direction de transport (X).

2. Dispositif (1) selon la revendication 1
**caractérisée en ce**
**qu'**il présente, entre le premier poste d'usinage (4) et le second poste d'usinage (6), un poste intermédiaire comprenant un second dispositif de dépôt de pièce (51), et est agencée de manière à ce qu'une pièce (W1, W2) déposée sur le second dispositif de dépôt de pièce (51) puisse être usinée par la première unité d'usinage (41) sur un autre petit côté et/ou une face inférieure.

3. Dispositif (1) selon la revendication 1 ou 2,
**caractérisé en ce**
**qu'**un dispositif de dépôt et/ou d'évacuation (7, 8) est disposée au côté du second poste d'usinage (6) opposé au premier poste d'usinage (4).

4. Dispositif (1) selon l'une quelconque des revendications précédentes,
**caractérisé en ce**
**que** la première unité d'usinage (41) et/ou la seconde unité d'usinage (64) comporte un outil entraîné rotatif, surtout une fraiseuse.

5. Dispositif (1) selon l'une quelconque des revendications précédentes
**caractérisée en ce**
**que** le premier poste d'usinage (4) et/ou le second poste d'usinage (6) la première station d'usinage comporte un magasin d'outils (42, 65) comprenant une pluralité d'outils qui y sont logés et pouvant être délivrés à la première unité d'usinage (41) et/ou la seconde unité d'usinage (64) pour la réalisation de l'usinage.

6. Dispositif (1) selon l'une quelconque des revendications précédentes,
**caractérisé en ce**
**que** le dispositif d'alignement comporte des butées (22, 23) surtout réglables.

7. Dispositif (1) selon l'une quelconque des revendications précédentes,
**caractérisé en ce**
**que** dispositif de transport (3; 31, 32) comporte un guidage (3) sur lequel le dispositif de prise de pièce (31, 32) est guidé de manière coulissante dans la direction de transport (X).

8. Dispositif (1) selon la revendication 8,
**caractérisé en ce**
**que** le guidage (3) s'étend de manière continue dans la direction de transport (X) depuis le poste d'alignement (2) en passant par le premier poste d'usinage et le second poste d'usinage (4, 6) et, le cas échéant, jusqu'au dispositif de dépôt et/ou d'évacuation (7, 8)

9. Dispositif (1) selon l'une quelconque des revendications précédentes,
caractérisé en ce
le dispositif de prise de pièce (31, 32) comporte des préhenseurs ou des ventouses de serrage mobiles dans la direction de transport

10. Dispositif (1) selon l'une quelconque des revendications précédentes,
**caractérisé en ce**
**que** le dispositif de prise de pièce (31, 32) s'étend depuis le sol au-dessus de la première unité d'usinage (41).

11. Dispositif (1) selon l'une quelconque des revendications précédentes,
**caractérisé en ce**
**que** le dispositif de prise de pièce (31, 32) s'étend depuis le sol au-dessous d'un support d'unités (63) de la seconde unité d'usinage (64).

12. Dispositif (1) selon l'une quelconque des revendications précédentes,
**caractérisé en ce**
**que** le dispositif de prise de pièce (31, 32) est conçu de manière à transporter les pièces en forme de plaque (W1, W2) en orientation horizontale, c'est-à-dire avec leurs faces, de préférence, sensiblement parallèles au sol, dans la direction de transport (X).

13. Dispositif (1) selon l'une quelconque des revendications précédentes,
**caractérisé en ce**
**que** le second dispositif de dépôt de pièce (61) comporte des traverses de préhension par aspiration (62) destinées au dépôt et au serrage de la pièce (W1, W2).
